**Europäisches Patentamt**

**European Patent Office**

**Office européen des brevets**

(19)

(11) Numéro de publication : **0 385 817 B1**

(12)

# FASCICULE DE BREVET EUROPEEN

(45) Date de publication du fascicule du brevet :
**09.12.92 Bulletin 92/50**

(51) Int. Cl.⁵ : **G01L 5/00**, A61B 5/22

(21) Numéro de dépôt : **90400252.4**

(22) Date de dépôt : **30.01.90**

(54) **Procédé de mesure du couple transmis à la roue motrice d'un cycle ou véhicule similaire et dispositif pour la mise en oeuvre de ce procédé.**

(30) Priorité : **28.02.89 FR 8902558**

(43) Date de publication de la demande :
**05.09.90 Bulletin 90/36**

(45) Mention de la délivrance du brevet :
**09.12.92 Bulletin 92/50**

(84) Etats contractants désignés :
**AT BE CH DE ES FR GB IT LI LU NL**

(56) Documents cités :
**EP-A- 0 270 439**
**WO-A-89/00401**

(56) Documents cités :
**DE-A- 3 150 149**
**DE-A- 3 330 525**
**DE-A- 3 408 497**
**DE-A- 3 429 805**

(73) Titulaire : **STE LOOK**
**Rue de la Pique, B.P. No. 72**
**F-58004 Nevers Cédex (FR)**

(72) Inventeur : **Mercat, Jean-Pierre**
**24, Rue Gambetta**
**F-37110 Chateau Renault (FR)**

(74) Mandataire : **Tony-Durand, Serge et al**
**Cabinet Tony-Durand 77, rue Boissière**
**F-75116 Paris (FR)**

EP 0 385 817 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne la mesure du couple transmis par une roue motrice, notamment la roue motrice d'un cycle.

Une telle mesure présente un intérêt primordial dans un certain nombre de cas. Ainsi cette mesure est essentielle pour un coureur cycliste au cours de son entraînement. Cependant une telle mesure est également très utile dans le cas de personnes pratiquant la bicyclette à titre de ré-éducation physique ou bien pour l'amélioration de leur condition physique.

C'est la raison pour laquelle il existe déjà un certain nombre de dispositifs destinés à permettre la mesure du couple transmis par une roue motrice. Ainsi le DE 3.150.149 mentionne plusieurs systèmes conçus dans ce but. Parmi ceux-ci ce brevet décrit plus particulièrement un système assurant la mesure de ce couple à partir de la détermination de la torsion du moyeu de la roue, entre une partie menante et une partie menée de celui-ci, cette torsion résultant de l'action du couple transmis. A cet effet, ce système comporte des moyens aptes à assurer la mesure optique de l'importance de cette torsion. Cependant il s'agit là d'une solution relativement complexe et coûteuse et celle-ci présente un certain un certain nombre d'inconvénients. Ainsi, ce système est particulièrement encombrant du fait de la présence des organes de mesure optique. De plus, la consommation de ce système en énergie électrique est loin d'être négligeable. Enfin, du fait même du très grand rapprochement existant entre la partie menante et la partie menée du moyeu, les écarts angulaires entre ces deux parties sont très réduits, ce qui ne permet pas des mesures précises.

On connaît du WO 89/00401 un dispositif de mesure du couple exercé sur une commande à manivelle, dans lequel le couple est transmis de la manivelle vers par exemple le pignon de chaîne d'une bicyclette. Le pignon est entraîné par l'intermèdiaire d'un manchon de torsion enfilé sur l'axe de pédalier et dont l'une des extrémités est reliée à celui-ci . Des jauges de contrainte sont disposées sur la surface du manchon et sont reliées à un pont de mesure. Ce dispositif est destiné à mesurer des différences de charge sur les deux jambes de l'utilisateur. Ce dispositif ne permet pas une mesure précise du couple.

On connaît du DE-A-3429805 un autre dispositif de mesure de la transmission de force dans un assemblage articulé d'un amortisseur de chocs hydraulique. L'axe d'articulation doit pour cette mesure être substitué par un axe de mesure présentant une section transversale globale en forme d'un I et comportant à proximité de chaque extrémité une série de jauges électriques de contrainte disposées sur des méplats symétriques de l'axe de mesure. Les jauges sont reliées à un pont de mesure comportant des résistances série, des résistance de tarage et des étalons. L'inconvénient de ce dispositif est qu'il est relativement couteux à cause de sa complexité.

C'est pourquoi la présente invention a pour objet un procédé et un dispositif qui sont conçus de façon à assurer la mesure du couple transmis à une roue motrice, et ce sans que l'on rencontre les inconvénients exposés ci-dessus.

Le procédé de mesure selon l'invention utilise les jauges électriques de contrainte incorporées dans le moyeu de la roue motrice correspondante et qui sont reliés à un circuit électrique comportant un appareil inducteur de la valeur du couple mesuré. Cependant ce procédé est essentiellement caractérisé en ce qu' :

- on dispose ces jauges sur l'une des extrémités de l'axe de la roue correspondante ou une pièce rapportée sur cette extrémité,
- en les plaçant de façon telle qu'elles ne puissent être influencées que par des variations d'effort s'exerçant sur cette extrémité de l'axe de la roue dans le plan horizontal passant par le centre de cet axe,
- de façon à mesurer uniquement la composante horizontale de l'effort tranchant s'exerçant sur l'axe de la roue, ce qui permet d'en déduire la valeur du couple transmis à celle-ci.

En effet, le présent procédé met à profit le fait que les actions de la roue motrice sur le cadre d'un cycle ont des composantes dans les trois directions et que les composantes situées dans un plan parallèle au sol sont liées uniquement à la tension de la chaine et à la réaction tangente de frottement de la roue sur le sol. En conséquence la détermination des composantes horizontales s'exerçant sur l'une ou l'autre pattes latérales de fixation de l'axe de la roue motrice permettent d'en déduire le couple transmis par cette roue si l'on tient compte des paramètres géométriques à prendre en considération, à savoir : la distance existant entre l'une et l'autre pattes de fixation ainsi que la distance entre la chaine motrice et la patte de fixation située sur le côté correspondant.

Quant au dispositif de mesure selon l'invention, il est conçu pour la mise en oeuvre du procédé défini ci-dessus. A cet effet, ce dispositif est essentiellement caractérisé en ce que l'une des extrémités de l'axe de cette roue, ou une pièce rapportée sur cette extrémité, porte des jauges de contrainte qui sont disposées de façon à ne pouvoir être influencées que par des variations d'effort s'exerçant dans le plan horizontal passant par le centre de l'axe de la roue correspondante, ces jauges de contrainte mesurant uniquement la composante horizontale de l'effort tranchant s'exerçant sur l'axe de la roue, ce qui permet d'en déduire la valeur du couple transmis à celle-ci.

Il convient de noter que dans la définition du procédé et du dispositif selon l'invention, l'expression "jauges électriques de contrainte" désigne tous types de capteurs d'efforts ou de déformations qui sont aptes à délivrer un signal électrique de valeur variable en fonction de l'importance des efforts ou déformations détectées. Ces capteurs peuvent fonctionner de diverses manières, par exemple par variation de leur résistivité, de leurs caractéristiques magnétiques ou de tout autre propriété, cette variation étant susceptible d'introduire une modification d'une caractéristique déterminée dans un circuit électrique d'exploitation du signal électrique ainsi émis par le ou les détecteurs correspondants.

Dans une forme de réalisation particulière du dispositif selon l'invention, les jauges de contrainte sont au nombre de quatre et rapportées deux à deux sur deux méplats s'étendant dans des plans verticaux de part et d'autre de l'extrémité correspondante de l'axe de cette roue, ces jauges étant branchées dans un pont de Wheastone.

Dans une autre forme de réalisation, l'extrémité de l'axe de cette roue, qui comporte le dispositif de mesure, est dissociée en deux parties -à savoir une partie principale portant le moyeu de la roue, et une partie terminale destinée à être fixée sur le support de cette roue,- ces deux parties étant reliées par une pièce d'accouplement apte à se déplacer sensiblement dans un plan horizontal, ou à se déformer dans un tel plan, sous l'effet d'un effort s'exerçant dans ce plan, la ou les jauges de contrainte du dispositif de mesure étant montées sur cette pièce de façon à détecter les efforts s'exerçant uniquement dans un plan horizontal.

Cependant d'autres particularités et avantages du procédé et des dispositifs selon l'invention apparaitront au cours de la description suivante. Celle-ci est donnée en référence au dessin annexé à simple titre indicatif, et sur lequel :

La figure 1 est une vue en élévation latérale d'une bicyclette dont la roue motrice est équipée d'un dispositif de mesure selon l'invention.

La figure 2 en est une vue partielle en coupe horizontale selon la ligne II-II de la figure 1.

La figure 3 est une vue partielle en coupe de l'extrémité gauche de l'axe de la roue, selon le même plan horizontal que la coupe de la figure 2, mais par dessous et à échelle différente.

La figure 4 est une vue en coupe verticale selon le plan IV-IV de la figure 3.

La figure 5 est une vue en coupe verticale selon le plan transversal V-V de la figure 4.

La figure 6 représente le schéma de montage des jauges de contrainte prévues dans le dispositif selon les figures précédentes.

La figure 7 est un schéma correspondant à la vue selon la figure 3, mais illustrant une déformation volontairement exagérée de l'extrémité correspondante de l'axe de la roue.

La figure 8 est une vue similaire à la figure 4, mais qui représente une autre forme de réalisation du dispositif selon l'invention.

Les figures 9 et 10 sont des vues en coupe-élévation selon les plans respectifs IX-IX et X-X de la figure 8.

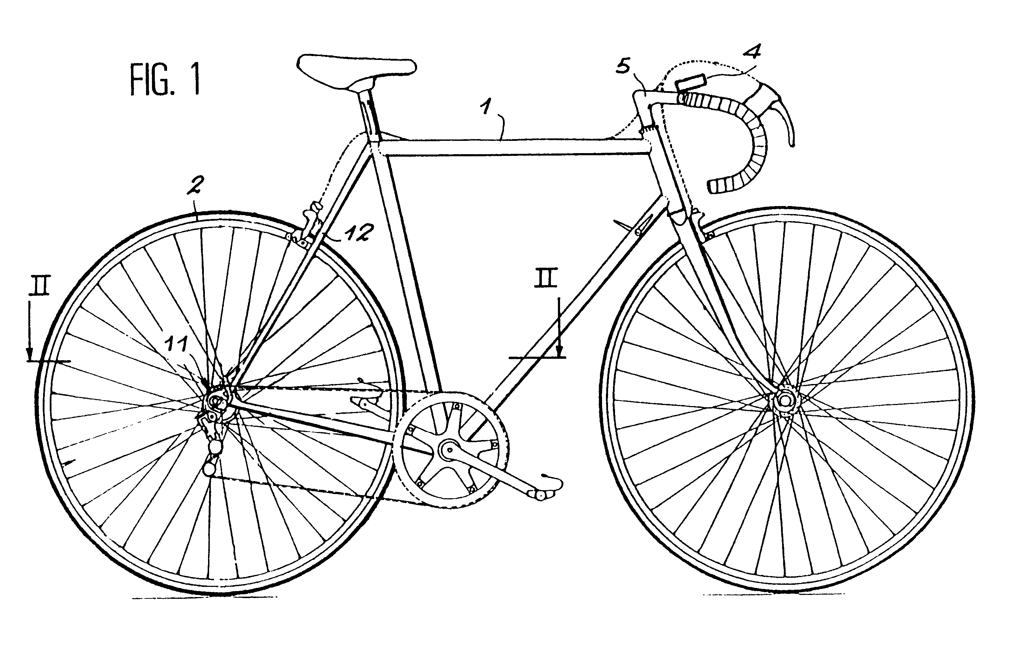

La bicyclette 1 représentée à la figure 1 comporte une roue arrière motrice 2 qui est équipée d'un dispositif permettant la mesure du couple transmis, et ce par mise en oeuvre du procédé selon l'invention.

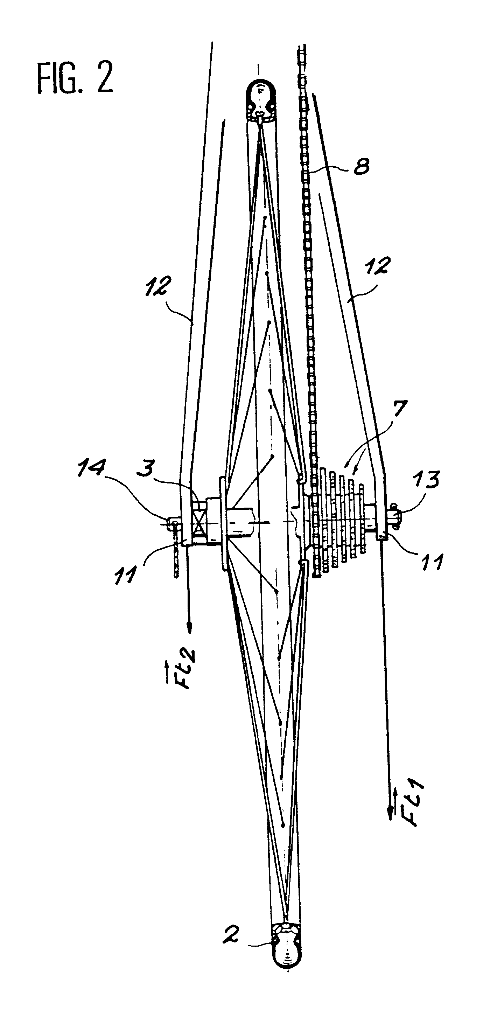

Comme il ressort de la figure 2, ce dispositif, désigné par la référence générale 3, est situé sur l'extrémité gauche de l'axe de cette roue. De plus, ce dispositif est raccordé, par des conducteurs électriques, à un petit boîtier 4 rapporté sur le guidon 5 de la bicyclette et qui renferme des moyens de traitement des informations provenant des moyens de détection prévus dans le dispositif de mesure selon l'invention. Ce boîtier comporte également un écran d'affichage des résultats obtenus.

De la manière habituelle, l'extrémité droite du moyeu 6 de la roue arrière 2 porte un ou plusieurs pignons 7 sur l'un desquels est engagé la chaîne d'entrainement 8. Ce moyeu est monté rotatif autour d'un axe creux 9 et ce avec interposition de roulements 10 prévus à l'une et l'autre extrémités. Les extrémités de cet axe sont engagées à l'intérieur des encoches de réception prévues dans les pattes 11 de fixation prévues sur l'un et l'autre côtés, lesquelles pattes sont portées par les extrémités inférieures des deux branches 12 de la fourche arrière. Le blocage est assuré au moyen d'une tige 13 engagée à l'intérieur de l'axe 9 et dont une extrémité porte un écrou de serrage 13, cependant que son extrémité opposée est pourvue d'un levier de blocage rapide 14 à excentrique.

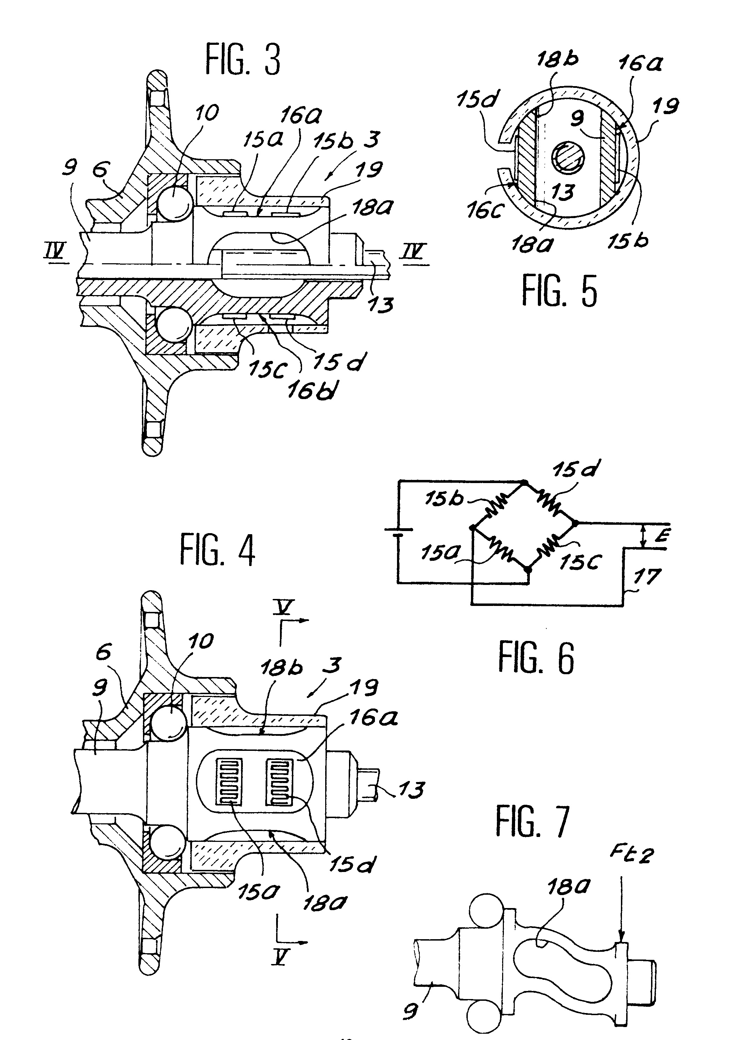

Dans la forme particulière de réalisation représentée sur les figures 3 à 7, le dispositif de mesure 3 comporte des jauges de contrainte qui sont fixées contre l'une des extrémités de l'axe 9 de la roue 2, en l'occurrence son extrémité gauche. Toutefois, en raison du faible encombrement de ce dispositif, celui-ci pourrait tout aussi bien être prévu sur l'extrémité droite de cet axe.

Ce dispositif comporte quatre jauges de contrainte 15a, 15b, 15c et 15d. Ces jauges sont rapportées deux à deux sur deux méplats 16a et 16d prévus de part et d'autre de l'extrémité correspondante de l'axe 9 et s'étendant sur celle-ci selon deux plans verticaux (voir figure 5). Ces jauges de contrainte sont reliées entre elles sous forme d'un pont de Wheastone dans un circuit 17 (voir figure 6), lequel aboutit à l'appareil inducteur 4 mentionné précédemment.

En raison de l'agencement prévu, le signal E obtenu à la sortie du circuit 17 est proportionnel à l'effort $Ft_2$ s'exerçant sur l'extrémité correspondante de l'axe 9 dans un plan horizontal passant par le centre de cet axe. Par contre, ce signal est complètement indépendant des autres efforts tels que les moments de flexion, etc. Ceci résulte du fait que les jauges sont disposées dans des plans verticaux et qu'elles sont reliées entre elles sous forme d'un pont de Wheastone, ce qui permet d'isoler électriquement la composante horizontale de l'effort tranchant s'exerçant sur l'extrémité correspondante de l'axe de la roue. Du reste la figure 7 représente, de façon volontairement très exagérée, la déformation subie par l'extrémité de l'axe de la roue sous l'effet du couple transmis.

Pour faciliter la flexion de l'extrémité de cet axe dans un plan horizontal, celui-ci peut comporter des découpes appropriées 18a et 18b situées respectivement à sa partie inférieure et à sa partie supérieure. Ces découpes amènent l'extrémité correspondante de l'axe 9 à se déformer, sous l'effet du couple transmis, d'une manière qualifiée improprement "à la façon d'un parallélogramme déformable". Ceci facilite donc la mesure prévue. Pour protéger le présent dispositif, et éviter tout risque de perturbation des mesures, un manchon 19 en matière souple est avantageusement rapporté sur l'extrémité correspondante de l'axe 9.

Comme déjà indiqué, le présent dispositif permet d'obtenir très facilement un signal E qui est représentatif de la composante horizontale Ft2 des efforts supportés par la patte correspondante 11 de fixation faisant partie du cadre de la bicyclette. Or à partir de cette donnée il est possible de déterminer aisément la valeur du couple transmis. Dans le cas d'une bicyclette comportant un seul pignon arrière, c'est-à-dire dans le cas d'un vélo de piste, ce calcul peut être établi directement par les moyens d'information contenus dans le boîtier 4.

Par contre, lorsqu'il s'agit d'un vélo normal de course dont la roue motrice comporte six ou sept pignons, la détermination de la valeur du couple transmis ne peut être réalisée qu'en tenant compte de l'identification du pignon qui se trouve en service et de son nombre de dents. Il est alors nécessaire de prévoir un système de détection de la position du dérailleur du changement de vitesse et de raccorder ce système au boîtier de mesure 4 afin de tenir compte des informations ainsi reçues. Toutefois cette légère complication se trouve éliminée dans le cas d'un vélo de course équipé d'un variateur de vitesse à la place d'un changement de vitesse à dérailleur.

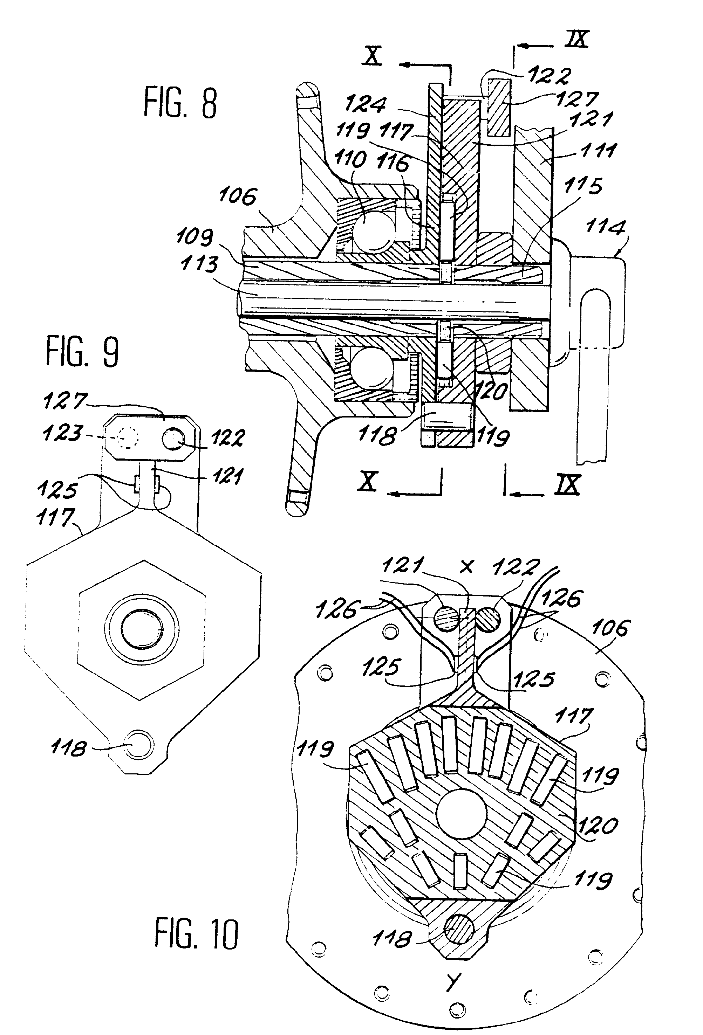

Ainsi qu'il a déjà été indiqué, les figures 8 à 10 représentent une autre forme de réalisation du dispositif de mesure selon l'invention.

Celle-ci se différencie de la précédente par le fait qu'elle est conçue de manière à isoler en quelque sorte mécaniquement l'effort à mesurer, c'est-à-dire la composante horizontale de l'effort tranchant s'exerçant sur l'extrémité correspondante de la roue.

A cet effet, cet axe est dissocié en deux parties, à savoir une partie principale 109 et une partie complémentaire 115. Cette dernière constitue l'extrémité gauche de cet axe, laquelle est engagée dans la patte de fixation correspondante 111. Quant à la partie principale 109 de cet axe, elle s'étend sur toute la longueur du moyeu et son extrémité opposée est engagée directement dans la patte de fixation 111 correspondante.

Pour la mesure à effectuer, il est prévu un dispositif qui comprend deux plaques 116 et 117 disposées verticalement l'une en regard de l'autre et qui sont solidaires en rotation avec l'une et l'autre partie 109 et 115 de l'axe de la roue. Ces deux plaques s'articulent l'une sur l'autre autour d'un axe commun 118 parallèle à l'axe de la roue. Entre ces deux plaques il est prévu une série de rouleaux en acier 119 montés librement rotatifs dans des logements ménagés dans une plaquette 120 qui leur sert en quelque sorte de support de montage. Grâce à la présence de ces rouleaux en acier, les deux plaques 116 et 117 peuvent se déplacer angulairement l'une par rapport à l'autre quasiment sans frottement, et ce malgré la compression due à l'effort exercé par la tige de blocage 113 de l'axe de la roue.

Or, la plaque externe 117 du dispositif porte une languette saillante 121 dont l'extrémité est disposée entre deux plots 122 et 123 portés par une patte rigide 124 solidaire de la seconde plaque 116 du dispositif. Il convient de noter que la languette 121 est disposée dans un plan X-Y passant par l'axe de l'ensemble et sur lequel se trouve également situé le centre de l'axe d'articulation 118 des deux plaques 116 et 117. De plus, pour que le présent dispositif soit apte à mesurer la composante horizontale Ft2 des efforts s'exerçant sur l'extrémité correspondante de l'axe de la roue, il convient que ce plan X-Y soit perpendiculaire au sol.

Pour exécuter cette mesure, la languette 121 est réalisée de façon à être élastiquement déformable. A cet effet, la plaque correspondante 117 est en acier de même que l'autre plaque 116 du dispositif et cette languette 121 est suffisamment amincie pour être élastiquement déformable. Ainsi, lorsque la roue est entraînée en rotation par l'effort du cycliste et que le moyeu 106 tend à tourner dans le sens de la flèche F, ceci tend à appliquer le plot 122 contre l'extrémité libre de la languette 121. Il en résulte un fléchissement du corps de cette languette, lequel est directement fonction de l'importance de l'effort Ft2 à mesurer.

Afin de réaliser cette mesure, il est prévu des jauges de contraintes 125 sur l'une et l'autre faces de la languette déformable 121. Celles-ci sont raccordées, par des conducteurs électriques 126, aux moyens de traitement d'informations prévus à l'intérieur du boîtier 4 déjà mentionné. Compte tenu de la conception du présent dispositif, ces jauges détectent la composante horizontale Ft2 des efforts s'exerçant sur l'extrémité correspondante de l'axe de la roue. Ainsi qu'il a été expliqué précédemment, ceci permet d'en déduire la valeur du couple d'entraînement. Bien entendu au lieu de deux jauges de contrainte 125 prévues sur l'une et l'autre faces de la languette déformable 121, il serait possible de prévoir quatre jauges, à raison de deux jauges sur chaque face, ces quatre jauges étant alors branchées dans un pont de Wheastone.

De préférence, ainsi qu'il apparait sur la figure 9, les deux plots 122 et 123 sont accouplés l'un à l'autre par une barrette 127 disposée en regard de l'extrémité de la languette déformable 121. Cette barrette assure ainsi le maintien de l'extrémité de cette languette entre les deux plots 122 et 123.

Bien entendu au lieu de mesurer le couple transmis à partir de la flexion subie par la languette verticale 21, il serait possible de le faire en déterminant l'effort de compression encaissé par une pièce déformable disposée dans le sens horizontal et qui ferait également partie d'un système d'accouplement entre les deux parties complémentaires 109 et 115 de l'axe de la roue. Un tel dispositif permettrait tout aussi bien de déterminer la valeur de la composante horizontale des efforts s'exerçant sur l'une des extrémités de l'axe de la roue et d'en déduire l'importance du couple transmis. Du reste de nombreuses autres solutions pourraient être utilisées pour détecter l'importance de l'effort s'exerçant dans le sens horizontal entre les deux parties complémentaires 109 et 115 de l'axe de la roue. Dans l'exemple représenté aux figures 8 à 10, le dispositif de mesure ainsi prévu est associé à l'extrémité gauche de l'axe de la roue. Cependant, bien qu'une telle solution soit moins pratique, il serait parfaitement possible de prévoir ce dispositif sur l'extrémité droite de cet axe pour détecter la valeur de la composante horizontale Ft1 des efforts s'exerçant à cet endroit.

Du reste, le dispositif de détection selon l'invention pourrait donner lieu à de nombreuses variantes et autres formes de réalisation permettant toutes la mise en oeuvre du procédé de mesure exposé précédemment. Comme indiqué, ce procédé et ce dispositif sont plus spécialement conçus pour la mesure du couple transmis dans le cas de la roue motrice d'un cycle. Du reste, l'invention a également pour objet les cycles équipés d'un tel dispositif de mesure. Cependant le procédé et le dispositif selon l'invention pourraient également être utilisés pour la mesure du couple transmis par une roue motrice sur un véhicule autre qu'un cycle.

**Revendications**

1. Procédé de mesure du couple transmis à la roue motrice d'un cycle ou autre véhicule, au moyen de jauges électriques de contrainte incorporées dans le moyeu de cette roue et reliés à un circuit électrique comportant un appareil indicateur de la valeur de ce couple, caractérisé en ce qu' :
   - on dispose ces jauges sur l'une des extrémités de l'axe de la roue correspondante ou une pièce rapportée sur cette extrémité,
   - en les plaçant de façon telle qu'elles ne puissent être influencées que par des variations d'effort s'exerçant sur cette extrémité de l'axe de la roue dans le plan horizontal passant par le centre de cet axe,
   - de façon à mesurer uniquement la composante horizontale de l'effort tranchant s'exerçant sur l'axe de la roue, ce qui permet d'en déduire la valeur du couple transmis à celle-ci.

2. Roue motrice de cycle ou autre véhicule similaire, comportant un dispositif de mesure pour la mise en oeuvre du procédé selon la revendication 1, au moyen de jauges électriques de contrainte incorporées dans le moyeu de cette roue et reliés à un circuit électrique comportant un appareil indicateur de la valeur de ce couple, caractérisé en ce que l'une des extrémités de l'axe (9, 109) de cette roue (2), ou une pièce (121) rapportée sur cette extrémité, porte ces jauges de contrainte (15a, 15b, 15c ou 125) qui sont disposées de façon à ne pouvoir être influencées que par des variations d'effort s'exerçant dans le plan horizontal passant par le centre de l'axe de la roue correspondante, ces jauges de contrainte mesurant uniquement la composante horizontale de l'effort tranchant s'exerçant sur l'axe de la roue, ce qui permet d'en déduire la valeur du couple transmis à celle-ci.

3. Roue motrice selon la revendication 2, caractérisé en ce que les jauges de contrainte (15a, 15b, 15c, 15d) sont au nombre de quatre et rapportées deux à deux sur deux méplats (16a, 16c) s'étendant dans des plans verticaux de part et d'autre de l'extrémité correspondante de l'axe (9) de cette roue, ces jauges étant branchées dans un pont de Wheastone.

4. Roue motrice selon la revendication 3, caractérisée en ce que l'extrémité de l'axe (9) de cette roue, sur laquelle sont rapportées les jauges de contrainte (15a, 15b, 15c, 15d), comporte une ou plusieurs encoches découpées (18a, 18b) ou similaires aptes à faciliter une certaine flexion de la partie terminale de celle-ci dans un plan horizontal passant par le centre de l'axe de la roue.

5. Roue motrice selon la revendication 2, caractérisée en ce que l'extrémité de l'axe de cette roue, qui comporte le dispositif de mesure, est dissociée en deux parties -à savoir une partie principale (109) portant le moyeu de la roue, et une partie terminale (115) destinée à être fixée sur le support de cette roue, ces deux parties étant reliées par une pièce d'accouplement (121) apte à se déplacer sensiblement dans un plan horizontal ou à se déformer dans un tel plan, sous l'effet d'un effort s'exerçant dans ce plan, la ou les jauges de contrainte (125) du dispositif de mesure étant montées sur cette pièce de façon à détecter les efforts s'exerçant uniquement dans un plan horizontal.

6. Roue motrice selon la revendication 5, caractérisée en ce que le dispositif de mesure comprend deux plaques verticales (116, 117) disposées verticalement l'une en regard de l'autre et qui sont solidaires en rotation avec l'une et l'autre partie (109 et 115) de l'axe (109) de la roue, ces deux plaques s'articulant l'une sur l'autre autour d'un axe commun (118) parallèle à l'axe de la roue et étant accouplées, du côté opposé, par une languette verticale (121) portée par l'une de ces deux plaques et disposée entre deux butées (122, 123) portées par l'autre plaque, la ou les jauges de contrainte (125) étant disposées sur cette languette flexible d'accouplement.

7. Cycle caractérisé en ce qu'il est équipé d'une roue motrice selon l'une des revendications 2 à 6, et que le dispositif de mesure prévu dans cette roue est raccordé à un appareil de mesure disposé dans un boîtier (4) comportant un cadran d'affichage et qui est fixé sur le guidon de ce cycle.

**Patentansprüche**

1. Verfahren zur Messung des Moments, das auf das Antriebrad eines Fahrrads oder eines anderen Fahrzeugs übertragen wird, mit Dehnungsmeßstreifen, die in der Nabe dieses Antriebsrads angeordnet und mit einem elektrischen Kreis verbunden sind, der eine Anzeigeeinrichtung für den Wert des Moments aufweist, dadurch gekennzeichnet, daß
    - die Dehnungsmeßstreifen am einen Ende der Achse des entsprechenden Antriebsrads oder einem mit diesem Ende verbundenen Teil angeordnet werden,
    - die Dehnungsmeßstreifen so plaziert werden, daß sie nur von Beanspruchungsänderungen beeinflußt werden, die in der Horizontalebene durch das Zentrum der Achse auf das Ende der Achse des Antriebsrads einwirken,
    - allein die Horizontalkomponente der Querkraft gemessen wird, die auf die Achse des Antriebsrads einwirkt und daraus das Errechnen des Werts des auf sie übertragenen Moments gestattet.

2. Antriebrad eines Fahrrads oder eines anderen ähnlichen Fahrzeugs, mit einer Meßeinrichtung zur Durchfürung des Verfahrens nach Anspruch 1, die Dehnungsmeßstreifen in der Nabe dieses Antriebsrads aufweist, die mit einem elektrischen Kreis verbunden sind, der eine Anzeigeeinrichtung für den Wert des Moments aufweist, dadurch gekennzeichnet, daß das eine Ende der Achse (9, 109) des Antriebsrads (2) oder in mit dem Ende verbundenes Teil (121) die Dehnungsmeßstreifen (15a, 15b, 15c oder 125) trägt, die so angeordnet sind, daß sie nur von Beanspruchungsänderungen beeinflußbar sind, die in der Horizontalebene durch das Zentrum der Achse des entsprechenden Antriebsrads wirken, so daß die Dehnungsmeßstreifen nur die Horizontalkomponente der Querkraft messen, die auf die Achse des Antriebsrads einwirkt, so daß daraus der Wert des auf sie übertragenen Moments errechnet werden kann.

3. Antriebrad nach Anspruch 2, dadurch gekennzeichnet, daß vier Dehnungsmeßstreifen (15a, 15b, 15c, 15d) vorgesehen und zu je zweien auf zwei Abflachungen (16a, 16c) angeordnet sind, die sich in Vertikalebenen des entsprechenden Endes der Achse (9) des Antriebsrads erstrecken, wobei die Dehnungsmeßstreifen in eine Wheatstonebrücke eingeschaltet sind.

4. Antriebsrad nach Anspruch 3, dadurch gekennzeichnet, daß das Ende der Achse (9) des Antriebsrads, auf dem die Dehnungsmeßstreifen (15a, 15b, 15c, 15d) angeordnet sind, eine oder mehrere Ausnehmungen (18a, 18b) o. dgl. zur Erleichterung einer gewissen Durchbiegung seiner Endpartie in einer Horizontalebene durch das Zentrum der Achse des Antriebsrads aufweist.

5. Antriebsrad nach Anspruch 2, dadurch gekennzeichnet, daß das Ende der Achse des Antriebsrads, das die Meßeinrichtung trägt, zweiteilig ausgebildet ist, nämlich in die Nabe des Antriebsrads tragendes Hauptteil (109) und ein Endteil (115) zum ortsfesten Lagern auf dem Träger des Antriebsrads aufweist, und daß die beiden Teile über ein Kupplungsstück (121) verbunden sind, welches sich feinfühlig in einer Horizontalebene verschieben oder in einer solchen Ebene unter der Einwirkung einer Kraft in dieser Ebene deformieren kann, wobei der oder die Dehnungsmeßstreifen (125) der Meßeinrichtung auf diesem Kupplungsstück in der Weise angeordnet sind, daß sie nur die in einer Horizontalebene einwirkenden Kräfte aufnehmen.

6. Antriebsrad nach Anspruch 5, dadurch gekennzeichnet, daß die Meßeinrichtung zwei Vertikalplatten (116, 117) aufweist, die vertikal zueinander angeordnet sind und mit dem einen oder dem anderen Teil (109 und 115) der Achse (109) des Antriebsrads drehfest verbunden sind, daß die beiden Vertikalplatten schwenkbar zueinander um eine gemeinsame, parallel zur Achse des Antriebsrads angeordnete Achse (118) gelagert und auf der gegenüberliegenden Seite über einen sich vertikal erstreckenden Fortsatz (121) gekuppelt sind, der an einer der beiden Vertikalplatten vorgesehen und zwischen zwei Anschlägen (122, 123) auf der anderen Vertikalplatte angeordnet ist, und daß der oder die Dehnungsmeßstreifen (125) auf dem flexiblen Kupplungsfortsatz angeordnet sind.

7. Fahrrad, dadurch gekennzeichnet, daß es mit einem Antriebsrad nach einem der Ansprüche 2 bis 6 ausgestattet ist, und daß die Meßeinrichtung in dem Antriebsrad mit einem Meßapparat in einem am Lenker des Fahrrads angebrachten Gehäuse (4) mit einem Anzeigezifferblatt verbunden ist.

**Claims**

1. A method for measuring the torque transmitted to the driving wheel of a cycle or other vehicle by means of electrical strain gauges incorporated in the hub of said wheel and connected in an electric circuit comprising an apparatus for indicating the value of said torque, characterized in that :
   - said strain gauges are placed on one end of the axle of the corresponding wheel or on a part attached thereto;
   - said gauges are placed in such manner that they may be influenced solely by variations of the strain exerted upon said end of the wheel axle along the horizontal plane passing through the centre line of said axle,
   - so as to measure only the horizontal component of the shearing strain being exerted on the wheel axle, from which can be derived the value of the torque transmitted to said wheel.

2. A driving wheel in a cycle or other similar vehicle, comprising a measuring device for carrying out the method according to Claim 1 by means of electrical strain gauges incorporated in the hub of said wheel and connected in an electric circuit comprising an apparatus for indicating the value of said torque, **characterized** in that one end of the axle (9, 109) of said wheel (2) or a part (121) attached thereto carries strain gauges (15a, 15b, 15c or 125) which are disposed in such manner that they may be influenced solely by variations of the strain exerted along the horizontal plane passing through the centre line of the axle of the corresponding wheel, said strain gauges measuring only the horizontal component of the shearing strain being exerted on the wheel axle, from which can be derived the value of the torque transmitted to said wheel.

3. A driving wheel according to Claim 2, characterized in that there are provided four strain gauges (15a, 15b, 15c, 15d) and that these are attached in pairs on two planes (16a, 16c) extending along vertical planes on either side of the corresponding end of the axle (9) of said wheel, said gauges being connected in a Wheatstone bridge.

4. A driving wheel according to Claim 3, characterized in that the end of the axle (9) of said wheel, to which are attached the strain gauges (15a, 15b, 15c, 15d), comprises one or several cut-out notches (18a, 18b) or the like capable of facilitating a certain flexion of the terminal portion of said axle end along an horizontal plane passing through the centre line of the wheel axle.

5. A driving wheel according to Claim 2, characterized in that the end of the axle of said wheel, which comprises the measuring device, is divided in two portions, namely a main portion (109) carrying the wheel hub, and a terminal portion (115) intended for being fixed to the support of said wheel, these two portions being connected together by a coupling piece (121) capable of displacing itself substantially along an horizontal plane or of deforming itself along such a plane under the effect of a strain being exerted along said plane, while the strain gauge or gauges (125) of the measuring device are mounted on said coupling member in such manner that only those strains being exerted along an horizontal plane will be detected.

6. A driving wheel according to Claim 5, characterized in that the measuring device comprises two vertical plates (116, 117) disposed vertically and facing each other, which are rotatably bound with both portions (109 and 115) of the wheel axle (109), these two plates being pivotable, one against the other, about a common axis (118) parallel to the wheel axle and being coupled on the opposite side by a vertical lug (121) carried by one of said two plates and disposed between two stops (122, 123) carried by the other plate, the strain gauge or gauges (125) being disposed on said flexible coupling lug.

7. A cycle characterized in that it is equipped with a driving wheel according to one of Claims 2 to 6 and in that the measuring device provided in said wheel is connected to a measuring apparatus disposed in a housing (4) comprising a display dial and which is fixed to the handlebar of said cycle.

FIG. 1

FIG. 2

FIG. 3

FIG. 5

FIG. 4

FIG. 6

FIG. 7

EP 0 385 817 B1

FIG. 8

FIG. 9

FIG. 10